# EUROPEAN PATENT APPLICATION

(11) **EP 1 113 381 A1**
(43) Date of publication of application: **04.07.2001**
(21) Application number: 99204620.1
(22) Date of filing: 30.12.1999
(51) Int. Cl.: G06F 17/60

(54) **Method and system for tracking web usage and internet applications**

(71) Applicant: Dresen, Alexander, 2800 Mechelen (BE)
(72) Inventor: Dresen, Alexander, 2800 Mechelen (BE)
(74) Representative: Gevers, François

(57) **Abstract**

A method for tracking the Web usage is disclosed, which comprises the step of supplying to a tracking server the URL of a series of data delivered from a data centre to a user in response to the user request.

## Description

The present invention relates to a method and a system for tracking web usage and internet applications.

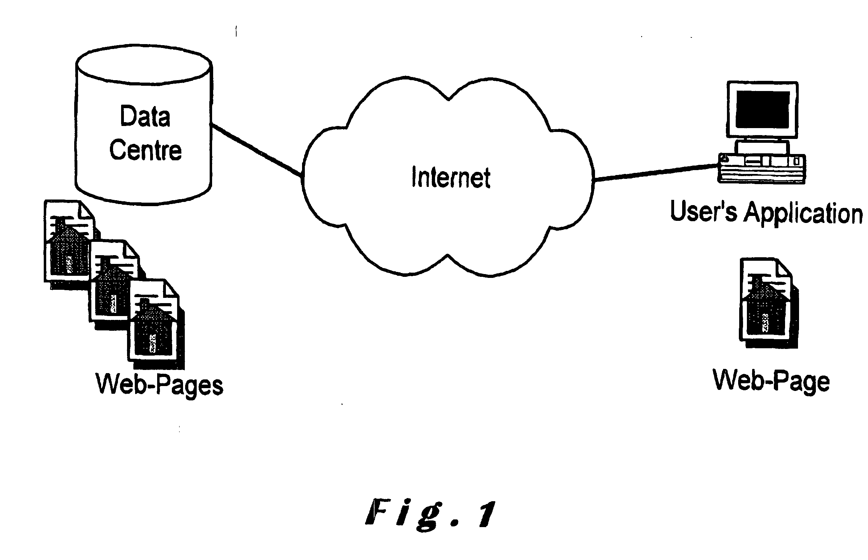

The concept of accessing information on the Internet through a web site consists of a server, that holds the "Information" on a "Data Centre", the intermediary telecommunication link "Internet" and the application to access this information "Application" (example: a webbrowser) that a "User" uses to access the information on the "Data Centre". This concept is illustrated in Figure 1.

All Information on a Data Centre is delivered to the User for example as a Web Page, which is either statically stored on the Data Centre or created on the fly by the Data Centre when requested by the User (see Fig 1).

A Data Centre may contain hundreds or even thousands and more Information parts that can be delivered to the User in an unlimited amount of ways. Although the type of Data Centre may vary, the way the information is delivered to the User is always the same, i.e. through a Web Page.

One of the existing methods to monitor the use of information accessed on a Data Centre is to study the server logs of the Data Centre. This method can only tell that the Data Centre sent a Web page to the User, but doesn't guarantee that the User actually received the Web Page on its Application.

According to the invention, the code is placed on a webpage and the code is only requested when the webpage actually arrives on the webbrowser of the user. This means that the measurement is only done when the user actually sees the webpage.

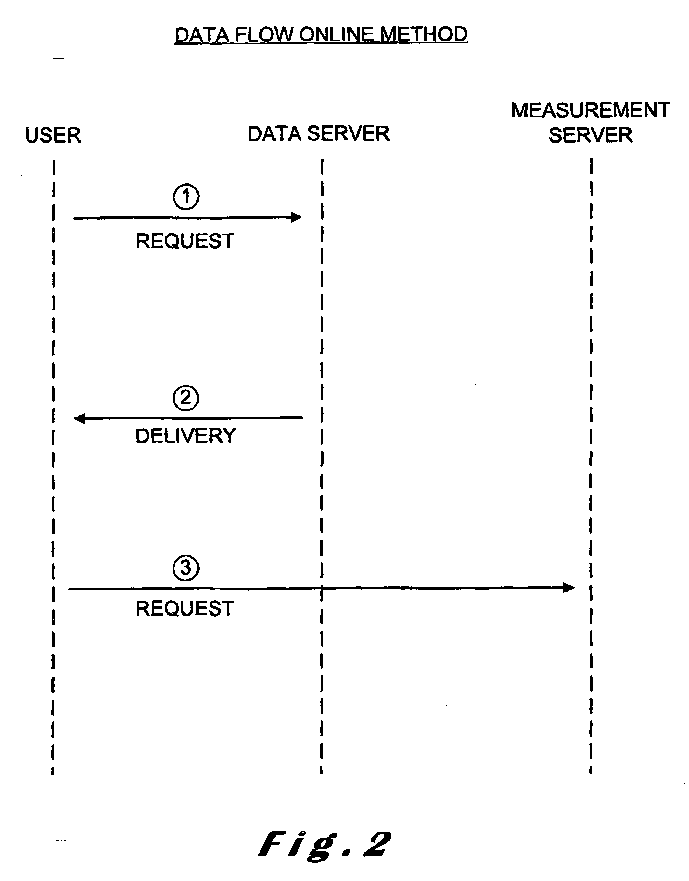

Figure 2 illustrates the data flow according to an online method. The following steps may be distinguished:
(1) The User requests data from the Data Center through a client application running on the Users computer. In order to request the data a request from the User is send to the Data Center.
(2) The Data Center receives the request of the User and answers by sending the requested data to the User. This data can be a webpage or another type of data. The data contains the Measurement Code.
(3) The Measurement Code is only processed when the User receives the data on its computer. For example if the user requested a web-page the Measurement Code is only processed when the requested webpage is shown on the computer screen of the User.

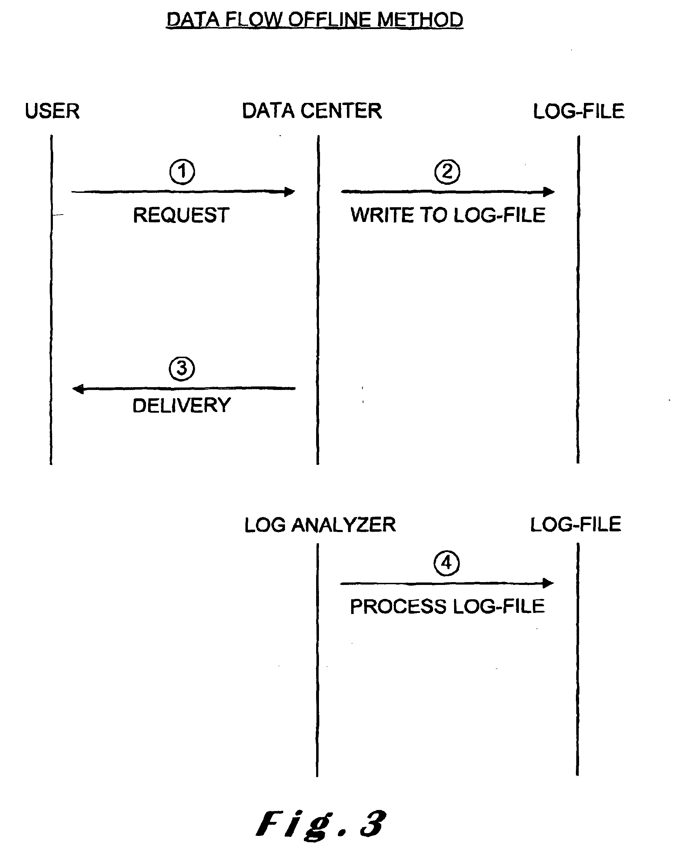

Figure 3 illustrates the data flow according to an offline method. The following steps may be distinguished :
(1) The User requests data from the Data Center through a client application running on the Users computer. In order to request the data a request from the User is send to the Data Center.
(2) The Data Center writes a line for each request to it's logfile. A line to the logfile is written when the Data Center (3) sends data to the User and does not guarantee that the User receives the data on it's computer.
(4) The Processing Application reads the log-file and presents reports of what data-requests the Data Server has send to Users. The reports cannot tell how much data actually was seen/read/received by the User(s).

This is an off-line approach as the server-log is studied and analysed after creation.

Another known method used to track usage is to provide "Blind Counters". A drawback of this method is that each page needs to be uniquely identified. For large sites that contain many pages or for sites that change often, this is a cumbersome tracking method. Typically, a Blind counter consists of a HTML code of the form
<img src=http://blindcounter.serveraddress/counter+string+identification_id>
counter-string

A counter string is the part that uniquely identifies each monitored webpage that is monitored through the blind method. The blind counter method requires that one creates different counters for different webpages.

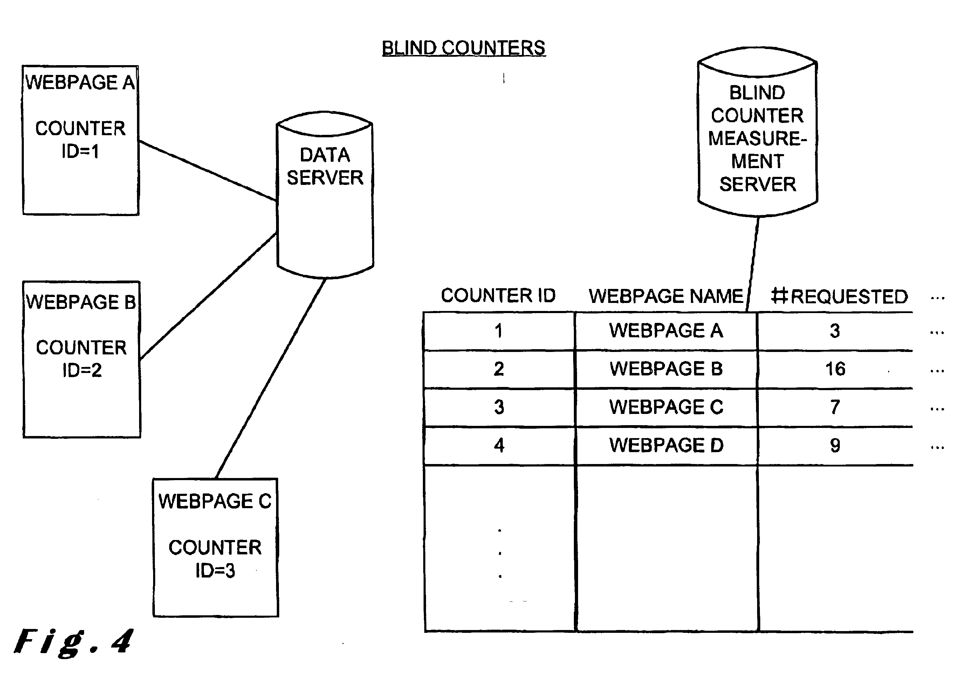

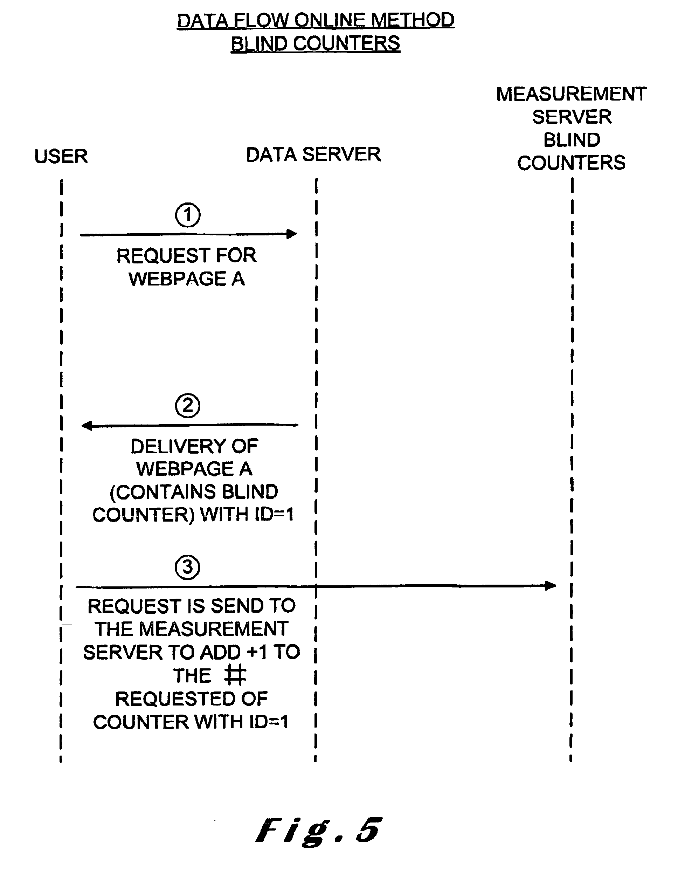

Figures 4 and 5 illustrate the Blind Counters principle.

The webpages are stored on the Data Center. And some webpages contain a Blind Counter with an id that is unique per page. For example page A has a blind counter with id=1, page B has a blind counter with id=2 and page C has a blind counter with id = 3, etc.
(1) The User requests webpage A from the Data Center through a client application running on the Users computer. In order to request this webpage A a request from the User is send to the Data Center.
(2) The Data Center receives the request of the User and answers by sending the requested webpage A to the User. The webpage contains the blind counter with id=1.
(3) The Measurement Code of the Blind Counter is only processed when the User receives the data on its computer. So when the User receives the webpage A on it's computer the Blind Code is processed and a request with Blind Counter id=1 is send to the Measurement Server.

The Measurement server gets a request with id=1 and knows that this id corresponds to the webpage A. It does not perform any checks if the Blind Code actually was requested from webpage A. It is perfectly possible to place the Blind Code with id=1 on page B and/or page C and tamper with the measurements,

Each Web-Page that is measured using the Blind Counter method has a unique identification_id. When a Web-Page, that contains this Blind Counter code, is requested, the counter for this identification_id is increased.

According to the invention, a method and system are provided to measure Web User-behaviour in real time and with minimum effort to the web pages stored in the Data Centre or created by the Data Centre Application. This invention should provide for the tracking of real usage, in order to measure realistic data on usage of the Web Pages, hence tracking the number of Users.

The method according to the invention is based on the fact that a User goes from one Web Page to another. The method uses the "Referrer" Web Page Address and a Unique Detecting code (same for all Web Pages) on each Web Page that needs to be measured.

The technique used in the method according to the invention uses the unique Internet addresses of Web Pages. Every Web-Page that is delivered to a User over the Internet has a unique Internet address: a URL (Uniform Resource Locator). This address is of the form:
http://"datacentre-address"/"request-query".

For example the URL for Web-Page A and Web-Page B respectively are:
http://datacentre-address/address_of_webpage_A
http://datacentreaddress/address_of_webpage_B

When a User moves from Web Page A to Web Page B by pressing a hyperlink on Web Page A to Web Page B, the referrer for Web-Page B is http://datacentre-address/address_of_webpage_A. This method is commonly used to identify from what URL's hyperlinks are placed to specific Web-Page(s).

The measuring method technique comprises the step of placing a specific code on all Web Pages that are delivered to the User requesting a page from the Data Centre. This code does not have any identification parts that are unique per Web Page or Data Centre. It is the same for all Web Pages in the Data Centres that need to be measured or tracked.

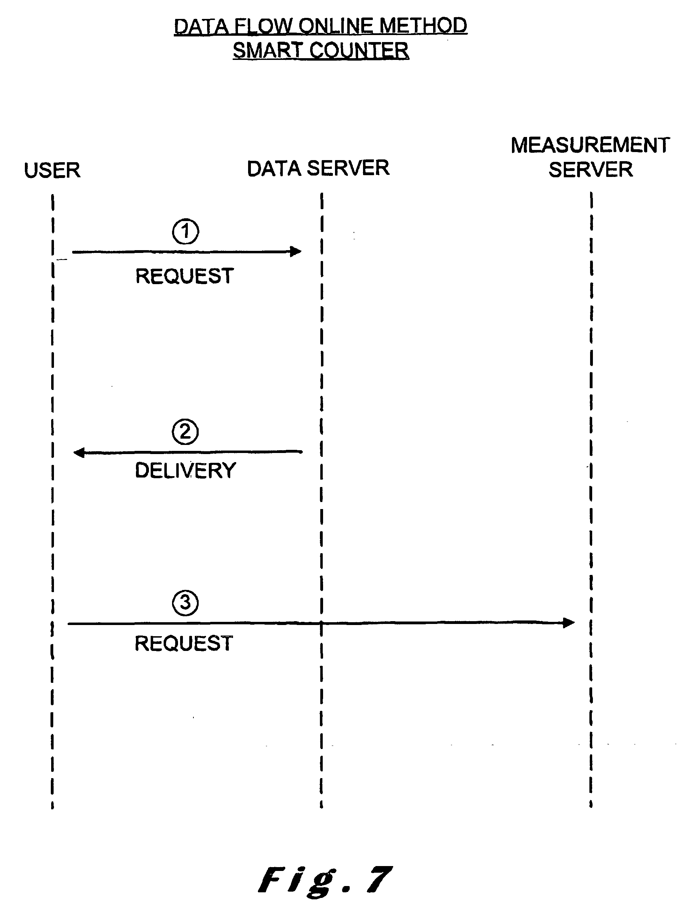

Figure 7 illustrate the data flow in the method according to the invention, using smart counters.
(1) The User requests data from the Data Center through a client application running on the Users computer. In order to request the data a request from the User is send to the Data Center.
(2) The Data Center receives the request of the User and answers by sending the requested data to the User. This data can be a webpage or another type of data. The data contains the Smart Counter Measurement Code.
(3) The Measurement Code is only processed when the User receives the data on its computer. For example if the user requested a web-page the Measurement Code is only processed when the requested webpage is shown on the computer screen of the User.
(4) The smart counter sends a request to the Measurement Server.
(5) The Measurement Server gets the referrer of that request and gets the unique URL-address of the webpage that has been viewed by the User when the Smart Counter requested a measurement from the Measurement Server.

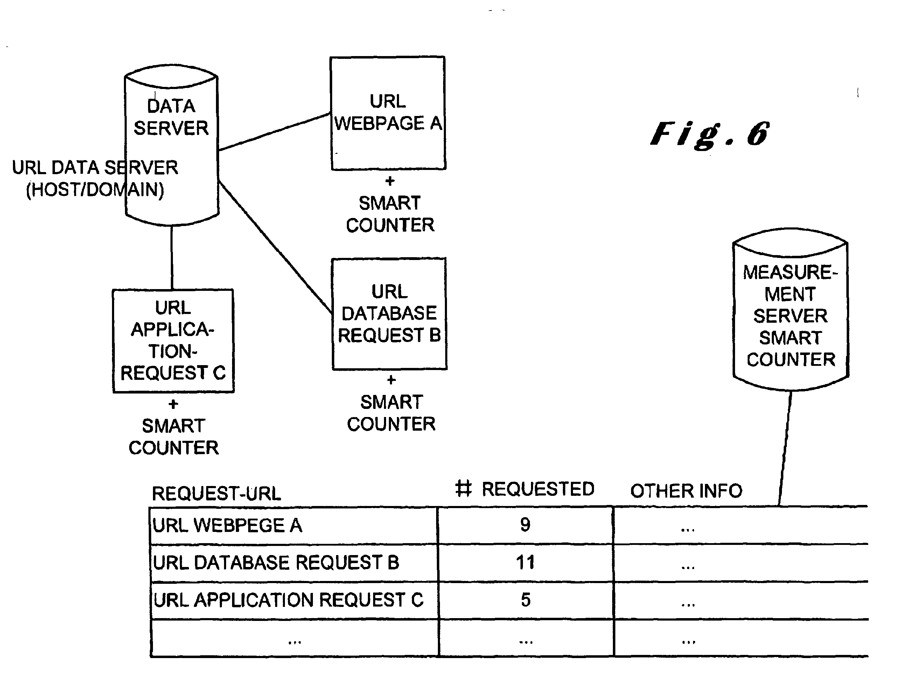

Figure 6 shows a detail of Getting the URL address of the requested webpage or data.

The referrer of the Smart Counter is the URL (Internet Address) of the Webpage.
(1) The Smart Counter is in fact a simple code that requests a small image or other data from the Measurement Server.
(2) When this request is received by the Measurement Server it handles this request by sending this data or image to the Users computer. When this happens the Measurement Server gets the Referrer of the requested Smart Counter. This Referrer is in fact the unique URL or unique internet address of the webpage or data that has been viewed by the User.

When the Measurement Server receives the Referrer it checks in the Request_ID table if has an entry for that specific Referrer or URL.

If the Request_ID table doesn't contain the URL it appends the URL to the table and assigns a Request_ID to the URL. This Request_ID is then used afterwards for reporting.

When the Measurement Server receives the Referrer it checks in the Request_ID table if the URL originates from a Data Center that is being monitored.

Each URL contains a host/domain part and request-location part.

In case the host/domain part doesn't correspond to the Data Center's host/domain('s) the measurement isn't processed.

If the host/domain does correspond a measurement is processed.

The measuring code or tracking comprises for example an image, or other element that a Web Page may include, such as:
<img src=http://blindcounter.serveraddress/counter+string>

It should be noted that this code does not contain a counter-id or any unique/page or unique/site number to identify itself with a specific Web Page.

When a User requests a Web Page, this "tracking" code is supplied by the Data Centre to the Tracking Server. The referrer of the requested tracking code is the R-URL (Web Address of the Web Page) that is requested.

Then the Tracking Server checks if this R-URL is already stored in the R-URL-Table. If the URL exists in the URL-Table and the URL isn't a reload request, then the counter for this URL is increased by 1.

If the R-URL isn't yet available in the R-URL-Table a new id is assigned and the R-URL is written in the URL-Table. Then the counter for this R-URL is set to 1. This counter is called the "Intelligent Counter".

To track the number of Users requesting the Web Page, the R-URL is also checked to determine if the page has already been requested by the same User within a specific time-frame.

Some additional advantages of the method and technique according to the invention are listed below:
1. As the R-URL of the Web Page is used as a means of measuring; instead of the id or number of a Blind counter the measurement is relevant and correct and cannot be faked by placing the counter on other Web Pages.
2. This method allows a very easy way to activate the tracking. Placing the same piece of tracking code on all Web Pages, without having to identify or create unique counters for each Web Page.
3. It also makes it possible to measure and audit database driven Data Centres. Database driven Web Pages are created on the fly and it would be impossible and very difficult to use the Blind Counter method to perform measurement. Knowing that only a limited amount of templates can be used to create an enormous amount of Web Pages by querying the database.
4. As the R-URL of each query is unique, then the proposed method identifies each query as an R-URL, therefore allowing the User of the query result to be tracked transparently.

With the method according to the invention, several applications may be conceived. One of the applications is the measuring of Users (visitors) to Web Sites.

The number of users of any web site and database-driven web sites can be tracked with this method in an easy way.

The Smart Counter can be used to count the number of Users visiting the pages or parts of pages in the Data Centre. Database or Internet Application driven web sites can be tracked. Each database request that is shown to a User (visitor) a through Web Application is measured completely. Each delivered Web Page to a User, represents an URL, that is passed on to measurement device via the referrer and each unique URL is assigned a page_id and other parameters as time, IP-address of the User, etc... This information can then be gathered, processed and presented in reports of number of UsersNisitors.

An example of a report could be:

| **Type** | **Page-views** | **Users** |
|---|---|---|
| **Today** | 760 | 91 |
| **Total (since start)** | 1127192 | 373450 |
| **Average/Day** | 11865 | 3931 |
| **Forecasted Today** | 28706 | 4045 |

| **Site Top Days** | | |
|---|---|---|
| **Type** | Record Amount | Date of Record |
| **Page views** | 46772 | |
| **Users** | 9784 | |

Another application of the method according to the invention is measuring User-behaviour of visitors of web sites. In this application, the intelligent counter gets the full URL of the page/database request and stores the exact time-of-the request of the IP-Address and/or writes a cookie to the visitors Application. For each request, this data is written to the database.

To describe the concept of User-behaviour we follow a User on its way over a website with 5 pages.

The User enters the Data Centre (Portal, Web Site,...) via a Web Page that is using the above techniques and triggers the Intelligent Counter.

This Web Page is considered the "Entrance Page" and the time/date and the IP-Address and the cookie gives the tracking application the possibility to identify the User as a unique visitor.

From then on the visitor is tracked as the User moves on, on the Site.

If the User is going through a web site with hundreds of Web Pages or through a data-base driven site, the intelligent counter system will be able to measure the full correct path of the User, despite how many pages or database-requests he/she gets delivered.

The User behaviour is then supplied as a report or other way of presentation after comparing and grouping all the behavioural paths of all the visitors. A User behaviour Sample report could for example be:
· 71.97% chat.to.be/menu.html
· 69.47% (50.00%) chat.to.be/chat/navigation.html
· 78.79% (39.39%) chat.to.be/chat/chat.html
· 07.58% (03.79%) chat.to.be/contact/navigation.html
· 06.06% (03.03%) visitors leave site
· 04.55% (02.27%) chat.to.be/menu.html
· 100.00% (02.27%) chat.to.be/chat/navigation.html
· 01.52% (00.76%) chat.to.be/fotos/navigation.html
· 01.52% (00.76%) chat.to.be/fotos/fotos.html

· 28.42% (20.45%) chat.to.be/chat/chat.html
· 01.05% (00.76%) tslserv.to.be/ptb/contact.searchform

### User Behaviour by using Smart Counters

(1) The user requests webpage A from the Data Center at 10h 25 10sec.
   The Measurement Server checks if a request from the Users ip-address/host or cookie was done in a certain time-period. If not writes the ip-address or host (and writes a cookie to the users webbrowser) of the user and sets the webpage A as an entry page for this User. The time of the request is saved.
(2) The user clicks on a link on webpage A to webpage B at 10h 26 25sec.
   The Measurement Server checks if the User with the same ip-address / host or cookie has requested a webpage in a specific time-period. In this case this is so. Then the Measurement Server checks if this User already has requested webpage B in a specific timeframe. In this case this isn't so and the Measurement Server processes webpage B and the second webpage the User has visited on the Data Server. The time of this request is also saved.
(3) The user writes the address of webpage C in the URL of it's webbrowser at 10h 27 10sec.
   The Measurement Server checks if the User with the same ip-address / host or cookie has requested a webpage in a specific time-period. In this case this is so. Then the Measurement Server checks if this User already has requested webpage C in a specific timeframe. In this case this isn't so. The Measurement Server then processes webpage C and the third webpage the User has visited on the Data Server. The time of this request is also saved.
(4) The user reloads the webpage C at 10h28 35sec.
   The Measurement Server checks if the User with the same ip-address / host or cookie has requested a webpage in a specific time-period. In this case this is so. Then the Measurement Server checks if this User already has requested webpage C in a specific timeframe. In this case this is so. Then the Measurement Server checks if the time-period between the current time and the time when the User has requested the same webpage C the previous time is smaller then 60 seconds (this can be changed). If this is the case the Measurement Server doesn't process this request and considers the Users action as a reload.
(5) The user clicks on a link on webpage C to webpage A. But before the webpage A is displayed on it's webbrowser the User stops the request.
   The webpage C never reaches the User and the therefore the Smart Counter is not requested from the Measurement Server and no measurements are done.

The method according to the invention is not limited to the indicated applications. Many other applications are conceivable, such as:
User and Visitor's time spent on Web Sites or Internet Application;
Comparison of User/Visitors tracking between periods of time;
Tracking of "loyalty', meaning, tracking of new Users versus Users that already visited the Web Pages /Site within a specific period.
Using the Smart Counter for feeding advertising based on the URL of the webpage which the User is viewing.

### Serving Banner-Advertisements with the Use of Smart Counters

(1) The User requests data from the Data Center through a client application running on the Users computer. In order to request the data a request from the User is send to the Data Center.
(2) The Data Center receives the request of the User and answers by sending the requested data to the User. This data can be a webpage or another type of data. The data contains the Smart Counter Measurement Code.
(3) The Measurement Code is only processed when the User receives the data on its computer. For example if the user requested a web-page the Measurement Code is only processed when the requested webpage is shown on the computer screen of the User.
(4) The smart counter sends a request to the Measurement Server.
(5) The Measurement Server gets the referrer of that request and gets the unique URL-address of the webpage that has been viewed by the User when the Smart Counter requested a measurement from the Measurement Server and sends a request to the Advertising Server.
(6) The Advertising Server processes the URL and based on the URL serves the appropriate advertisements, for example a banner.

### Direct Benefits for Advertisement Serving with the use of Smart Counters.

Instead of creating unique advertising HTML-codes for unique advertising spaces or advertising slots on Data Centers it is possible to use one Smart Advertising Code for all Advertising spaces.

Database driven Data Centers have the ability to serve Advertising based on the database request.

## Claims

1. A method for tracking the Web usage, comprising the step of supplying to a tracking server the URL of a series of data delivered from a data centre to a user in response to the user request.

2. A method for serving advertisements based on the URL of the webpage that contains the Advertisement Code.
